# EUROPEAN PATENT APPLICATION

(11) **EP 1 832 562 A2**
(43) Date of publication of application: **12.09.2007**
(21) Application number: 07250940.9
(22) Date of filing: 07.03.2007
(51) Int. Cl.: C04B 35/468, C01G 23/00, H01G 4/12, H01G 4/30

(54) **Ceramic powder, electroconductive paste using same, multilayer ceramic electronic component, and method for production thereof**

(30) Priority: 10.03.2006 JP 2006065945
(71) Applicant: TDK Corporation, Tokyo 103-8272 (JP)
(72) Inventor: Hara, Haruya c/o TDK Corporation, Tokyo 103-8272 (JP); Watanabe, Yasuo c/o TDK Corporation, Tokyo 103-8272 (JP); Sato, Akira c/o TDK Corporation, Tokyo 103-8272 (JP)
(74) Representative: Wise, Stephen James

(57) **Abstract**

As the ceramic powder for addition to the electroconductive paste fated to form intermal electrode layers in a multilayer ceramic electronic component resulting from alternately stacking the dielectric ceramic layers and internal electrode layers, a ceramic powder that possesses a perovskite-type crystal structure and satisfying the condition that the weight ratio Wt/Wc of the tetragonal phase content Wt and the cubic phase content Wc be less than 2 is used. The weight ratio Wt/Wc of the tetragonal phase and the cubic phase is determined by the polyphasic analysis in accordance with the Rietveld method. The ceramic powder is a barium titanate powder, for example.

## Description

### BACKGROUND OF THE INVENTION

### Field of the Invention:

This invention relates to a ceramic powder to be added as a common material to internal electrode layers in a multilayer ceramic electronic component resulting from alternatively stacking dielectric ceramic layers and the internal electrode layers and particularly to a ceramic powder useful for enhancing the insulating property of the multilayer ceramic electronic component. This invention further relates to an electroconductive paste using the ceramic powder mentioned above, a multilayer ceramic electronic component, and a method for the production thereof.

### Description of the Prior Art:

The multilayer ceramic capacitor, for example, that is one of multilayer ceramic electronic components possesses a structure resulting from alternately stacking dielectric ceramic layers and internal electrode layers till a plurality of pairs and has been extensively used as an electronic part having a small size, a large capacity, and high reliability. Not infrequently, a great number of multilayer ceramic capacitors are used in one electronic device.

In recent years, electronic devices have been undergoing reduction in size and addition to performance. This trend has been urging the multilayer ceramic capacitor with increasingly more severity to acquire reduction in size, addition to capacity, decrease in price, enhancement of reliability, and the like. For the purpose of enabling the multilayer ceramic capacitor to secure reduction in size and addition to capacity in response to the harsh demand, the dielectric ceramic layers have reached the point where they are required to decrease the layer thickness and increase the number of component layers. The increase in size and the addition to capacity mentioned above are rendered feasible by thinning the dielectric ceramic layers forming the multilayer ceramic capacitor and increasing the number of layers for lamination.

Incidentally, when the thinning of the dielectric ceramic layers and the adding to the number of component layers for lamination mentioned above are taken into account, the formation of the internal electrode layers with an internal electrode-oriented electroconductive paste having such a noble metal as Pd as a main ingredient is disadvantageous from the viewpoint of production cost, for example. When the internal electrode layers are formed of an internal electrode-oriented electroconductive paste having as a main ingredient thereof such a noble metal as Pd, the cost for forming the electrodes is inevitably increased markedly in consequence of the addition to the number of component layers for lamination. In the circumstance, an internal electrode-oriented electroconductive paste that has as a main ingredient thereof such a base metal as Ni has been developed. The multilayer ceramic capacitor that has the internal electrode layers thereof formed of this paste has been befitting practical use.

When the internal electrode layers are formed of the aforementioned internal electrode-oriented electroconductive paste having as a main ingredient thereof such a base metal as Ni, however, the decrease in thickness of the dielectric ceramic layers to below 10 µm or the increase in the number of component layers to above 100 possibly entails such problems as inducing separation (delamination) or inflicting a crack (structural defect) and consequently degrading the yield of production owing to the conspicuousness of the influences of the shrinkage or expansion of internal electrode layers and the difference in shrinkage behavior of dielectric ceramic layers.

For the purpose of ensuring solution of these problems, the suppression of the shrinkage of Ni powder during the course of firing or the enhancement of the strength of a dielectric material fated to form the dielectric ceramic layers is effective and the practice of adding into the internal electrode-oriented electroconductive paste used for the formation of the internal electrode layers a powder material of the same kind as the ceramic powder contained in the dielectric paste as a common material is prevailing (refer to JP-A 2005-347288). By adding the common material to the electroconductive paste mentioned above, it is rendered possible to approximate the sintering starting temperature of the electroconductive paste to the sintering starting temperature of the shaped ceramic body and approximate the degree of shrinkage during the course of sintering to that of the shaped ceramic body as well and suppress the occurrence of the cracking mentioned above.

Alternatively, the practice of changing the composition of the ceramic forming the dielectric ceramic layers or the practice of changing the conditions of firing or the conditions of reoxidizing treatment is prevailing (refer to JP-A 2004-221268). JP-A 2004-221268 discloses a method for producing a multilayer ceramic electronic component so that the difference between the temperature at which the rate of change of the degree of shrinkage during the course of firing the external ceramic layers is maximized and the temperature at which the rate of change of the degree of shrinkage during the firing performed in the state having completed formation of the internal electrodes of ceramic layers of the internal electrode-stacking part is maximized may become not more than 60°C. It also discloses the fact that, as compared with the ratio, A/B, of the mol concentration A of the A site ions and the mol concentration B of the B site ions of the ceramics forming the ceramic layers of the internal electrode-stacking part, the mol ratio A/B in the external ceramic layers is made to become small.

The trend of the multilayer ceramic electronic components toward decreasing size and increasing capacity has been rendering increasingly difficult the solution of the problems solely by the aforementioned conventional technique. Specifically, when the decrease in size and the increase in capacity of the multilayer ceramic electronic components further advance, the ratio of the Ni part (internal electrode layers) to the whole device increases, the aforementioned problem of delamination and cracking appears more conspicuously, the ratio of occurrence of cracks increases in spite of the countermeasure mentioned above, and the yield of production is degraded possibly to the extent of posing problems.

This invention has been proposed in view of the actual state of related art mentioned above and is aimed at providing a ceramic powder and an electroconductive paste that, even when the decrease in thickness of the dielectric ceramic layers forming a multilayer ceramic electronic component and the increase in number of the component layers are further advanced, enable suppressing the occurrence of cracking and enhancing the yield of production. This invention, in consequence of the provision of the ceramic powder and the electroconductive paste mentioned above, is also aimed at realizing a multilayer ceramic electronic component excelling in insulating property and durability during the exposure to a high-temperature load and exhibiting high reliability and is further aimed at providing a method for the production thereof.

### SUMMARY OF THE INVENTION

The present inventors have carried out many studies over a long time with a view to accomplishing the object mentioned above. To be specific, they have performed a further detailed analysis on the ceramic powder for use in the common material of the internal electrode layers of the multilayer ceramic electronic component. As a result, they have eventually acquired a knowledge that the ceramic powder possessing a perovskite-type crystal structure contains a tetragonal phase and a cubic phase and the optimization of the ratio (weight ratio) of the tetragonal phase and the cubic phase is effective for the purpose of suppressing the occurrence of cracking in the multilayer ceramic electronic component.

This invention has been accomplished based on this knowledge. That is, the ceramic powder of this invention is a ceramic powder that is intended to form internal electrode layers in a multilayer ceramic electronic component resulting from alternately stacking the dielectric ceramic layers and the internal electrode layers and is characterized by possessing a perovskite-type crystal structure and satisfying an expression X < 2, wherein X denotes the weight ratio Wt/Wc of the tetragonal phase content Wt and the cubic phase content Wc.

The electroconductive paste of this invention is an electroconductive paste that is intended to form internal electrode layers in a multilayer ceramic electronic component resulting from alternately stacking the dielectric ceramic layers and he internal electrode layers and is characterized by containing an electroconductive material and a ceramic powder and containing the aforementioned ceramic powder as the ceramic powder mentioned above. Further, the multilayer ceramic electronic component of this invention is a multilayer ceramic electronic component that is obtained by alternately stacking dielectric ceramic layers and internal electrode layers and is characterized by the fact that the internal electrodes are obtained by forming electrode precursory layers of the aforementioned electroconductive paste and firing the resultant precursory layers. The method for producing the multilayer ceramic electronic component of this invention, in the process of obtaining the multilayer ceramic electronic component by alternately stacking dielectric green sheets and electrode precursory layers respectively with a dielectric paste and an electroconductive paste and subsequently firing the resultant multilayer body, is characterized by using the electroconductive paste mentioned above as the electroconductive paste mentioned above.

Regarding the ceramic powder for use as a common material of an electroconductive paste, virtually no study has been made to date as to what sort of ceramic powder suffices this use. Basically, the ceramic powder that is similar to the ceramic powder intended to form the dielectric ceramic layers is in use now. This invention has emanated from performing many analyses concerning the ceramic powder for use as the common material mentioned above and optimizing this ceramic powder.

In barium titanate possessing a perovskite-type crystal structure, for example, the X-ray diffraction chart is varied in consequence of variation of the specific surface area. The present inventors inferred that the variation of the X-ray diffraction chart mentioned above was caused by the mixed phase consisting of a tetragonal phase and a cubic phase. When they subjected the X-ray diffraction chart to polyphasic analysis (such as the biphasic analysis presuming the two phases, ie a tetragonal phase and a cubic phase) by the Rietveld Method, the results concurred satisfactorily with the inference and endorsed the correctness of the inference. When the analysis was further advanced, it was found that the ratio of the tetragonal phase and the cubic phase was varied as by the conditions of production of barium titanate and this variation affected characteristic properties. Specifically, when the ceramic powder possessing the perovskite-type crystal structure satisfies the expression X < 2, wherein X denotes the weight ratio Wt/Wc of the tetragonal phase content Wt and the cubic phase content Wc, it is rendered possible to suppress the occurrence of cracking.

This invention, as the index of the selection of raw material (ceramic powder), adopts the weight ratio Wt/Wc (= X) of the tetragonal phase content Wt and the cubic phase content Wc. By using the ceramic powder that is selected based on this index as the common material in the formation of the internal electrode layers, it is rendered possible to suppress the occurrence of cracking and enhance the yield of production of the multilayer ceramic electronic component even when the dielectric ceramic layers forming the multilayer ceramic electronic component are required to incur decrease in thickness and increase in the number of layers in consequence of a reduction in size or a large addition to capacity, for example.

### BRIEF DESCRIPTION OF THE DRAWINGS

FIG. 1 is a schematic cross section illustrating one structural example of a multilayer ceramic capacitor.

FIG.2 (a) to (e) are drawings showing in type section the manner of change of the X-ray diffraction chart of a barium titanate powder. These X-ray diffraction charts are observed approximately at 2θ=44 to 46°.

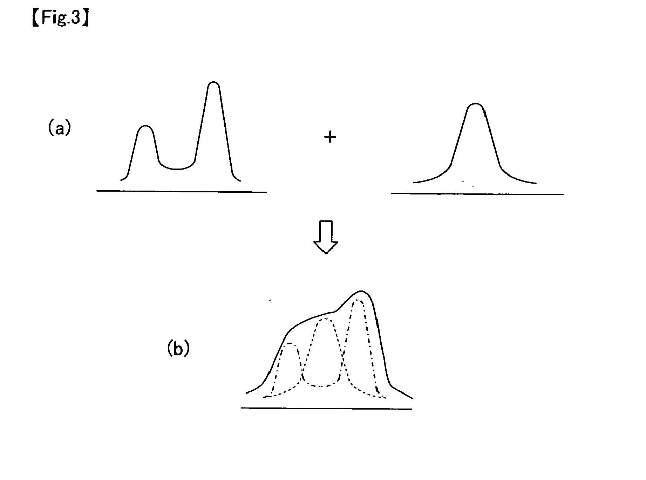

FIG.3 (a) is an X-ray diffraction chart of a tetragonal phase and a cubic phase and FIG. 3 (b) is an X-ray diffraction chart assuming a mixed phase. These X-ray diffraction charts are observed approximately at 2θ=44 to 46°.

### DETAILED DESCRIPTION OF THE PREFERRED EMBODIMENTS

Now, the ceramic powder and the electroconductive paste that make use of this invention and further the multilayer ceramic electronic component (specifically a multilayer ceramic capacitor herein) and the method for production thereof will be described in detail below.

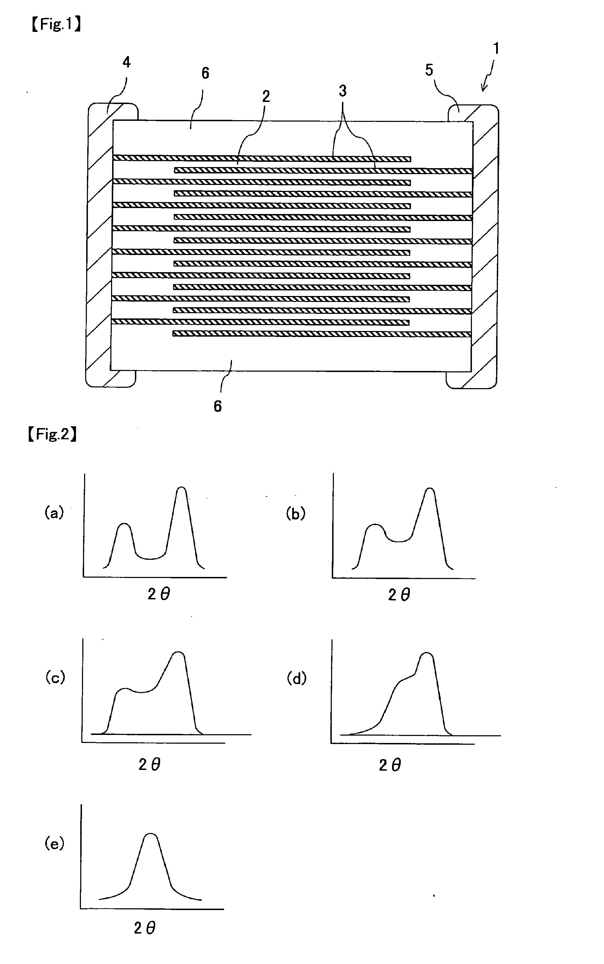

First, to explain the multilayer ceramic capacitor that uses the ceramic powder of this invention, the main body of device is configured in a multilayer ceramic capacitor 1 by alternately stacking a plurality of pairs of dielectric ceramic layers and internal electrode layers as illustrated in FIG. 1. The internal electrode layers 3 are so stacked that the end faces on both sides thereof may be alternately exposed toward the two opposed end faces of the main body of device and a pair of external electrodes 4, 5 are so formed in the terminal parts on both sides of the main body of device that they may be continued to the internal electrode layers 3. Further, in the main body of device, external cladding dielectric layers 6 are disposed in both the terminal parts in the direction of stacking of the dielectric ceramic layers 2 and the internal electrode layers 3. These external cladding dielectric layers 6 are vested with a role of chiefly protecting the main body of device and formed as an inert layer.

Though the shape of the main body does not need to be particularly restricted, it is generally in the shape of a rectangular body. The size of the main body does not need to be particularly restricted but may be properly set to suit the purpose of use. For example, it may approximately measure 0.6 mm to 5.6 mm (preferably 0.6 mm to 3.2 mm) in length × 0.3 mm to 5.0 mm (preferably 0.3 mm to 1.6 mm) in width × 0.1 mm to 1.9 mm (preferably 0.3 mm to 1.9 mm (preferably 0.3 mm to 1.6 mm) in thickness.

The dielectric ceramic layers 2 mentioned above are made of a dielectric ceramic composition and formed by sintering the powder of the dielectric ceramic composition (ceramic powder). The dielectric ceramic composition prefers to contain as a main ingredient thereof a dielectric oxide possessing a perovskite-type crystal structure represented by the constitutional formula, ABO₃ (wherein A site is formed of at least one element selected from the group consisting of Sr, Ca, and Ba and B site is formed of at least one element selected from the group consisting of Ti and Zr). Here, the amount of oxygen (O) may deviate to a certain extent from the stoichiometric composition of the aforementioned constitutional formula. Of all the dielectric oxides answering the constitutional formula, barium titanate that is obtained by forming the A site mainly of Ba and the B site mainly of Ti proves to be favorable. More favorably, the dielectric oxide is barium titanate represented by the constitutional formula, BaₘTiO₂₊ₘ (wherein 0.995 ≤ m ≤ 1.010 and 0.995 ≤ Ba/Ti ≤ 1.010 are satisfied).

Besides the main ingredient, the dielectric ceramic composition may contain various kind of accessory ingredient. As the accessory ingredient, at least one oxide selected from the group consisting of oxides of Sr, Zr, Y, Gd, Tb, Dy, V, Mo, Zn, Cd, Ti, Sn, W, Ba, Ca, Mn, Mg, Cr, Si, and P may be cited. The addition of such an accessory ingredient results in enabling the sintering to proceed at a low temperature without degrading the dielectric property of the main ingredient. It also results in suppressing the inferior reliability taking place when the dielectric ceramic layers 2 are given a decreased thickness and as well allowing addition to the service life.

The conditions of the dielectric ceramic layers 2 such as the number of layers and the thickness of each layer may be properly decided to suit the purpose of use. The thickness of the dielectric ceramic layers 2 is about 1 µm to 50 µm and preferably not more than 5 µm. From the viewpoint of enabling the multilayer ceramic capacitor to acquire a decreased size and an increased capacity, the dielectric ceramic layers 2 prefer to have a thickness of not more than 3 µm and the dielectric ceramic layers 2 prefer to be stacked up to a total of not less than 150 layers.

Though the electroconductive material to be contained in the internal electrode layers 3 is not particularly restricted, such a base metal as, for example, Ni, Cu, Ni alloy, or Cu alloy may be used. The thickness of the internal electrode layers 3 may be properly decided to suit the purpose of use. It is, for example, about 0.5 µm to 5 µm and preferably not more than 1.5 µm.

Though the electroconductive material contained in the external electrodes 4 and 5 is not particularly restricted, generally Cu, Cu alloy, Ni, Ni alloy, Ag, or Ag-Pd alloy are used. Cu, Cu alloy, Ni, and Ni alloy prove to be advantageous because they are inexpensive materials. While the thickness of the external electrodes 4, 5 may be properly decided to suit the purpose of use, it is about 10 µm to 50 µm, for example.

In the multilayer ceramic capacitor 1 possessing the structure mentioned above, the ceramic powder (common material) contained in the electroconductive paste that is used for forming the internal electrode layers 3 exerts a great influence on the characteristic properties. This invention realizes enhancement of the insulating property by rendering appropriate the ceramic powder destined to serve as the common material. Specifically, this invention subjects a ceramic powder possessing a perovskite-type crystal structure to powder X-ray diffraction analysis, performs polyphasic analysis by the Rietveld method on the results of the powder X-ray diffraction analysis, and selects a ceramic powder that satisfies the expression X < 2, wherein X denotes the weight ratio Wt/Wc of the tetragonal phase content Wt and the cubic phase content Wc.

Now, the polyphasic analysis by the Rietveld method mentioned above will be described below. In the powder X-ray diffraction analysis, for example, the lattice constant can be derived from the peak position, the crystal structure parameters (polarization coordinates, population, atomic displacement parameter, etc.) from the area (integrated intensity) of the diffraction profile, the lattice strain and the crystallite size from the broadening of profile, and the mass fractions of the component phases of a mixture. In the powder neutron diffraction analysis, the magnetic moments of various magnetic atomic sites can be derived further from the integrated intensity.

The Rietveld method mentioned above is a general-purpose technique for powder diffraction data analysis that can be simultaneously determining fundamentally important physical quantities in solid-state physics, chemistry, and materials chemistry and serves as a tool for comprehending physical phenomena and chemical properties manifested by polycrystalline materials from the structural aspect. The important object of the Rietveld method is to refine crystal structure parameters included in crystal structure factors Fₖ and serves the purpose of directly précising the structural parameters and the lattice constants with respect to the whole of powder X-ray diffraction patterns and powder neutron diffraction patterns. That is, this method implements the fitting of a diffraction pattern computed based on an approximate structure model in order that the computed diffraction pattern may agree as closely with the actually measured pattern as possible. As the salient advantages of the Rietveld method, the ability to determine not only the crystal structure parameters but also the lattice constant with high accuracy and precision and also the ability to determine the lattice strain, the crystallite size, and the contents of components in a mixture may be cited in respect of the fact the method admits all the analysis patterns as the objects of fitting and pays due respect to the presence of Kα₂ reflection in the case of the X-ray characteristic.

In the ceramic powder possessing a Perovskite-type crystal structure such as barium titanate, the presence of a tetragonal phase and a cubic phase has been known. The X-ray diffraction pattern of this ceramic powder is varied in concert with variation of the mean particle diameter (specific area) thereof. FIG. 2 depicts the appearance of variations in the X-ray diffraction pattern in barium titanate. In the X-ray diffraction of barium titanate, two peaks of the tetragonal phase are observed as shown in FIG. 2 (a) when the mean particle diameter is large (the specific area is small). In contrast, when the average diameter gradually decreases (the specific surface area gradually increases), the two peaks gradually become indistinct as shown in FIG. 2 (b) to FIG. 2 (d) and eventually join into a single peak of the cubic phase as shown in FIG. 2 (e).

Here, the present inventors tried subjecting the X-ray diffraction chart to polyphasic analysis by the Rietveld method on the assumption that the state shown in FIG. 2 (b) to FIG. 2 (d) had resulted from the overlap of the X-ray diffraction chart of the tetragonal phase and the X-ray diffraction chart of the cubic phase (namely that the ceramic powder had been the mixed phase between the tetragonal phase and the cubic phase). Incidentally, the polyphasic analysis by the Rietveld method mentioned above is not limited to the biphasic analysis mentioned above but may be the analysis involving three or more phases.

The results of the biphasic analysis mentioned above suggest firstly that the analysis excelling in precision has been implemented accurately. This fact may be safely regarded as endorsing the correctness of the aforementioned assumption (purporting the mixed phase between the tetragonal phase and the cubic phase) and has led the inventors to the comprehension that the ceramic powder having a relatively small mean particle diameter (a large specific surface area) is the mixed phase of a tetragonal phase and a cubic phase. To date, the barium titanate powder has never been recognized as the mixed phase of a tetragonal phase and a cubic phase.

Secondly, it has been ascertained that, when the ceramic powder is used as the common material in the case of forming the internal electrode layers 3 of the multilayer ceramic capacitor 1, the ratio of the tetragonal phase and the cubic phase exerts an influence on the characteristic properties and, particularly when importance is attached to the suppression of cracking, satisfaction of the expression X < 2, wherein X denotes the weight ratio Wt/Wc of the tetragonal phase content Wt and the cubic phase content Wc, is advantageous. By satisfying this expression X < 2, it is rendered possible to suppress the occurrence of cracking and delamination and enhance the yield of production even when the dielectric ceramic layers 2 forming the multilayer ceramic capacitor 1 are given a reduced thickness or the number of component layers is increased.

The weight ratio X mentioned above varies with the conditions for the production of the ceramic powder, for example. The X-ray diffraction chart, notwithstanding an unchanged appearance, possibly produces a value different from the weight ratio X mentioned above when it is actually subjected to polyphasic analysis by the Rietveld method mentioned above. Since this difference defies comprehension by the conventional X-ray diffraction analysis, it becomes necessary to find the value by the polyphasic analysis according to the Rietveld method mentioned above and select what satisfies the aforementioned condition.

As regards the aforementioned weight ratio Wt/Wc (= X) of the tetragonal phase content Wt and the cubic phase content Wc, the expression X < 2 constitutes the basis for the selection of the ceramic powder possessing the perovskite-type crystal structure as already pointed out. In this case, the fact that the ceramic powder is the mixed phase between a tetragonal phase and a cubic phase serves as a prerequisite and the ceramic powder consisting solely of a cubic phase (the value of X is zero) is not included. The value of the X mentioned above has its own limit in spite of all efforts to contrive the condition of production, for example. The value of this X, therefore, prefers to be 0.05 at the least (namely X > 0.05) and more favorably 0.25 ≤ X ≤ 1.50.

This invention aims to maintain insulating property while thinning the dielectric ceramic layers 2 and, therefore, prefers to give the component dielectric ceramic layers 2 a thickness of not more than 3 µm as described above and consequently give the component dielectric ceramic layers 2 a thickness of not more than 1.5 µm. Abreast with these magnitudes of thickness, the specific surface area SSA of the ceramic powder to be used as the common material in the formation of the internal electrode layers 3 prefers to exceed 10 m²/g When the specific surface area SSA is 10 m²/g, the mean particle diameter is approximately 0.1 µm. If the specific surface area SSA of the ceramic power to be used as the common material is unduly small (the mean particle diameter is unduly large), the shortage will render the thinning of the internal electrode layers 3 difficult.

By using for the multilayer ceramic capacitor 1 the raw material (ceramic powder) selected by the method of selection of raw material based on the polyphasic analysis in accordance with the Rietveld method as the common material in the case of forming the internal electrode layers 3, it is rendered possible to realize further reduction in size and further addition to capacity of the multilayer ceramic capacitor 1. Next, therefore, the method for producing the multilayer ceramic capacitor using the ceramic powder mentioned above will be explained below.

To produce the multilayer ceramic capacitor possessing the aforementioned configuration, dielectric green sheets destined to form dielectric ceramic layers 2, electrode precursory layers destined to form internal electrode layers 3 subsequent to firing, and external cladding green sheets destined to form external cladding dielectric layers 6 are prepared and they are stacked to complete a multilayer body.

The dielectric green sheets can be obtained by preparing a dielectric paste containing a ceramic powder, applying this dielectric paste to carrier sheets as base materials by the doctor blade method, and drying the resultant coated carrier sheets. The dielectric paste is prepared by kneading the ceramic powder destined to serve as a body material and an organic vehicle or a water-based vehicle. For the preparation of the dielectric paste, the mean particle diameter and the specific surface area thereof may be selected in conformity with the thickness of the dielectric ceramic layers 2.

Incidentally, the expression "the organic vehicle" that is used for the preparation of the dielectric paste mentioned above" refers to what results from dissolving a binder in an organic solvent. The binder to be used for the organic vehicle is not particularly restricted but may be properly selected from among various ordinary binders such as ethyl cellulose and polyvinyl butyral. The organic solvent to be used for the organic vehicle also is not particularly restricted but may be properly selected from among various organic solvents such as terpineol, diethylene glycol monobutyl ether, acetone, and toluene. The term "water-based vehicle" refers to what results from dissolving a water-soluble binder or dispersant in water. The water-soluble binder is not particularly restricted. The use of polyvinyl alcohol, cellulose, water-soluble acrylic resin, or the like suffices.

Then, the electrode precursory layer is formed by having the prescribed region of the dielectric green sheet mentioned above printed with an electroconductive paste containing an electroconductive material. The electroconductive paste is prepared by causing the electroconductive material and a common material (ceramic powder) to be kneaded with the organic vehicle. As the common material mentioned above, the ceramic powder that satisfies the necessary condition explained above (namely, the necessity that the weight ratio Wt/Wc of the tetragonal phase content Wt and the cubic phase content Wc be less than 2) is used.

After the multilayer body is formed, the sinter (main body of device) is obtained by performing a treatment for the removal of binder, a firing work, and a heat treatment adapted to re-oxidize the dielectric ceramic layers 2 and the external cladding dielectric layers 6. The treatment for the removal of binder, the firing work, and the heat treatment for the sake of re-oxidization may be performed continuously or independently.

The treatment for the removal of binder may be performed under ordinary conditions. When such a base metal as Ni or Ni alloy is used in the electroconductive material for the internal electrode layers 3, however, this treatment prefers to be carried out under the following conditions. The rate of temperature increase is in the range of 5 to 300°C/hour, particularly 10 to 50°C/hour, the standing temperature is in the range of 200 to 400°C, particularly 250 to 340°C, the standing time is in the range of 0.5 to 20 hours, particularly 1 to10 hours, and the atmosphere is a humidified mixed gas of N₂ and H₂.

As the firing conditions, the rate of temperature increase is in the range of 50 to 500°C/hour, particularly 200 to 300°C/hour, the standing temperature is in the range of 1100 to 1300°C, particularly 1150 to 1250°C, the standing time is in the range of 0.5 to 8 hours, particularly 1 to3 hours, and the atmosphere is preferably a humidified mixed gas of N₂ and H₂.

During the firing, the oxygen partial pressure in the atmosphere prefers to be not more than 10⁻² Pa. If the oxygen partial pressure exceeds the upper limit mentioned above, the excess will possibly result in oxidizing the internal electrode layers 3. If the oxygen partial pressure is unduly low, the shortage will tend to induce abnormal sintering of the electrode material and inflict a break on the internal electrode layers 3. The oxygen partial pressure of the firing atmosphere, therefore, prefers to be in the range of 10⁻² Pa to 10⁻⁸ Pa.

The heat treatment after the firing is carried out with the holding temperature or the highest temperature set generally at not less than 1000°C and preferably in the range of 1000°C to 1100°C. If the holding temperature or the highest temperature mentioned above falls short of 1000°C, the shortage will possibly result in oxidizing the electroconductive material (Ni) in the internal electrode layers 3 and exerting an adverse effect on the capacity and the service life of the multilayer ceramic capacitor.

The atmosphere for the heat treatment mentioned above is given a higher oxygen partial pressure than that of the firing, preferably in the range of 10⁻³ Pa to 1 Pa and more preferably in the range of 10⁻² Pa to 1 Pa. If the oxygen partial pressure of the atmosphere for the heat treatment falls short of the range, the shortage will render the re-oxidation of the dielectric layers difficult. Conversely, if it exceeds the range, the excess will possibly result in re-oxidizing the internal electrode layers 3. As the conditions of the heat treatment, the holding time is in the range of 0 to 6 hours, particularly 2 to 5 hours, the rate of temperature decrease is in the range of 50 to 500°C/hour, particularly 100 to 300°C/hour, and the atmosphere is humidified N₂ gas, for example.

Finally, the multilayer ceramic capacitor 1 illustrated in FIG: 1 is obtained by forming the external electrodes 4 and 5 in the main body of device, ie the resultant sinter. The external electrodes 4 and 5 may be formed, for example, by grinding the end faces of the sinter performing barrel polishing or sand blasting and subsequently searing a coating material formulated for the external electrodes on the ground end faces.

### [Example]

Now, a working example embodying this invention will be explained below based on the results of an experiment.

### XRD (powder X-ray diffraction) measurement

The powder X-ray diffraction (XRD) measurement was performed by the use of a powder X-ray diffraction device (made by Rigaku K.K. and sold under the product name of Rint2000), and measurement range of 20 is from 10 to 130°. As a result, XRD profile data for the Rietveld analysis was obtained. In this measurement, the electrical current and the electrical voltage were so set that the step width would reach 0.01° and the largest peak count about 10000 counts.

### Rietveld analysis

The XRD profile data consequently obtained was analyzed by the use of the software, RIETAN-2000 (Rev. 2. 4. 1) (for Windows), intended for Rietveld analysis. For the determination of the mass fractions of the component phases, the Microabsorption with due correction was adopted.

### Study on reliabilily of polyphasic analysis by Rietveld method

Analysis of a barium titanate powder possessing a perovskite-type crystal structure (specific surface area SSA 6.16 m²/g and mean particle diameter 0.16 µm determined by a scanning electron microscope) was tried by the Rietveld method. The Rietveld analysis was executed in three modes, ie the monophasic analysis of a tetragonal phase (tetragonal crystal), the monophasic analysis of a cubic phase (cubic crystal), and the biphasic analysis of the tetragonal phase (tetragonal crystal) + the cubic phase (cubic crystal). The reliability factors in these analyses are shown in Table 1.

### [Table 1]

Of the indexes for evaluating the condition of progress of the Rietveld analysis and the degree of agreement between the actual intensity and the calculated intensity, the most important R factor is Rwp. Since Rwp is prone to the influences of diffraction intensity and background intensity, however, the index S value (= Rwp/Re) destined to compare Re equaling the smallest statistically expected Rwp with Rwp serves as a substantial yardstick for indicating good fitness of analysis. S = 1 signifies perfection of precision. So long as S is smaller than 1.3, the results of analysis may well be regarded as satisfactory. A review of Table 1 from this point of view reveals that the s value resulting from the biphasic analysis of the tetragonal phase and the cubic phase is not more than 1.3, namely a smaller s value than is the s value obtained by the monophasic analysis. This fact indicates properness of conclusion that the analyzed ceramic powder consists of the two, one tetragonal and one cubic, phases.

### Study regarding the weight ratio Wt/Wc (=X) of tetragonal phase content Wt and cubic phase content Wc in ceramic powder used as common material

Multilayer ceramic capacitors were manufactured by following the method of production described above while using varying kinds of ceramic powders (barium titanate powders) (Examples 1 to 4 and Comparative Examples 1 to 3). The multilayer ceramic capacitors so manufactured had a size of 1.0 mm × 0.5 mm × 0.5 mm, the number of stacked dielectric ceramic layers was 160, the thickness of each of the component dielectric ceramic layers was 1.6 µm, and the thickness of each of the internal electrodes was 1.0 µm. The specific surface area SSA of the ceramic powder (common material) contained in the electroconductive paste used for the formation of the internal electrode layers, the mean particle diameter measured with a scanning electron micrograph (SEM particle diameter), the content Wt of the tetragonal phase, the content Wc of the cubic phase, the weight ratio Wt/Wc (= X) thereof, and the number of structural defects in the manufactured multilayer ceramic capacitors are shown in Table 2.

### [Table 2]

It is clear from Table 2 that in the ceramic powder to be used as the common material, favorable results evinced by conspicuous suppression of structural defects are obtained by satisfying the weight ratio Wt/Wc (= X) < 2 of the tetragonal phase and the cubic phase. The suppression of structural defects brings a great increase in the yield of production.

**[table 1]**

| SSA | SEM diameter | Model | Reliability Factor | |
|---|---|---|---|---|
| | | | S value | R_{wp} |
| 6.16 | 0.16 | Tetragonal Crystal | 1.3654 | 15.23 |
| | | Cubic Crystal | 1.5423 | 16.21 |
| | | Tetragonal Crystal + Cubic Crystal | 1.2445 | 11.84 |

**[table 2]**

| | ceramic powder | | | | | multilayer ceramic capacitor |
|---|---|---|---|---|---|---|
| | SSA | SEM diameter | Weight Ratio | | | number of occurrences of structural defects |
| | | | Tetragonal(Wt) | Cubic(Wc) | Wt/Wc | |
| Comparative Example1 | 12.8 | 0.08 | 0.815 | 0.185 | 4.41 | 530ppm |
| Comparative Example2 | 13.0 | 0.08 | 0.668 | 0.332 | 2.01 | 250ppm |
| Comparative Example3 | 12.8 | 0.08 | 0.735 | 0.265 | 2.77 | 321ppm |
| Example1 | 12.9 | 0.08 | 0.655 | 0.345 | 1.90 | 180ppm |
| Example2 | 13.1 | 0.08 | 0.608 | 0.392 | 1.55 | 127ppm |
| Example3 | 13.2 | 0.08 | 0.556 | 0.444 | 1.25 | 98ppm |
| Example4 | 12.9 | 0.08 | 0.587 | 0.413 | 1.42 | 43ppm |

## Claims

1. A ceramic powder for addition to an electroconductive paste destined to form internal electrode layers in a multilayer ceramic electronic component resulting from alternately stacking dielectric ceramic layers and the internal electrode layers, the ceramic powder **characterized by** possessing a perovskite-type crystal structure and satisfying an expression X < 2, wherein X denotes the weight ratio Wt/Wc of the tetragonal phase content Wt and the cubic phase content Wc.

2. A ceramic powder according to claim 1, wherein the tetragonal phase content Wt and the cubic phase content Wc are values obtained by polyphase analysis according to the Rietveld method.

3. A ceramic powder according to claim 1, wherein the specific surface area is not less than 10 m²/g.

4. A ceramic powder according to any of claim 1, wherein barium titanate powder constitutes a main ingredient.

5. An electroconductive paste destined to form internal electrode layers in a multilayer ceramic electronic component resulting from alternately stacking dielectric ceramic layers and the internal electrode layers and **characterized by** containing an electroconductive material and a ceramic powder and the ceramic powder being a ceramic powder set forth in any of claims 1 to 4. as a ceramic powder.

6. An electroconductive paste according to claim 5, wherein the electroconductive material has a base metal as a main ingredient.

7. An electroconductive paste according to claim 6, wherein the base metal is Ni.

8. A multilayer ceramic electronic component resulting from alternately stacking dielectric ceramic layers and internal electrode layers, the internal electrode layers **characterized by** being obtained by forming electrode precursory layers of an electroconductive paste set forth in any of claims 5 to 7 and firing these precursory layers.

9. A multilayer ceramic electronic component according to claim 8, which is a multilayer ceramic capacitor.

10. A method for producing a multilayer ceramic electronic component by alternately stacking dielectric green sheets and electrode precursory layers respectively with a dielectric paste and an electroconductive paste and subsequently firing the resultant multilayer body, the method **characterized by** using an electroconductive paste set forth in claims 5 to 7 as the electroconductive paste.
